# EUROPÄISCHE PATENTSCHRIFT

(11) **EP 2 818 743 B1**
(45) Veröffentlichungstag und Bekanntmachung des Hinweises auf die Patenterteilung: **08.08.2018**
(21) Anmeldenummer: 14173373.3
(22) Anmeldetag: 23.06.2014
(51) Int. Cl.: F16C 35/067, F16C 43/04, A47J 43/07, F16C 19/08

(54) **Einbauteil, beispielsweise einer Küchenmaschine sowie Verfahren zur Montage eines Einbauteiles**
Built-in part, e.g. of a food processor and method for installing a built-in part
Composant, par exemple d'un robot ménager et procédé de montage d'un composant

(30) Priorität: 24.06.2013 DE 102013106563; 26.03.2014 DE 102014104187
(43) Veröffentlichungstag der Anmeldung: 31.12.2014
(73) Patentinhaber: Vorwerk & Co. Interholding GmbH, 42275 Wuppertal (DE)
(72) Erfinder: Büttner, Oliver, 42283 Wuppertal (DE); Schiffer, Ernst-Uwe, 42111 Wuppertal (DE); Arnold, Hans-Peter, 58566 Kierspe (DE); Zachos, Alexandros, 45131 Essen (DE)
(74) Vertreter: Müller, Enno

(56) Entgegenhaltungen:
- EP-A1- 0 433 725
- DE-U1- 9 111 191
- JP-A- 2009 185 859
- US-A1- 2002 172 443
- US-A1- 2005 018 351

## Beschreibung

Die Erfindung betrifft zunächst ein Einbauteil nach den Merkmalen des Oberbegriffes des Anspruches 1. Weiter betrifft die Erfindung ein Verfahren zur Montage eines Einbauteils nach den Merkmalen des Oberbegriffes des Anspruches 5.

Einbauteile der in Rede stehenden Art sind bekannt, so beispielsweise in Form eines Messerlagers für ein Rührwerk in einem Rührgefäß einer Küchenmaschine. Hierbei ist eine, das Einbauteil bevorzugt insgesamt durchsetzende Welle vorgesehen, die einerends bevorzugt über einen elektromotorischen Antrieb drehantreibbar ist und weiter bevorzugt anderenends ein Werkzeug, beispielsweise einen Messer- oder Rührwerksatz trägt. Die Welle ist in dem Einbauteil über in Axialrichtung zueinander distanzierte Wälzlager gelagert, wobei für einen ruhigen Lauf insbesondere der Welle eine Lagervorspannung, d.h. eine Vorspannung der zueinander distanzierten Wälzlager in Axialrichtung aufeinander zu, eingestellt wird. Hierzu ist es weiter bekannt, entsprechend auf ein oder beide Lager einwirkende Federelemente in das Einbauteil einzusetzen.

Aus der JP 2009-185859 A, dass die Merkmale des Oberbegriffs von Anspruch 1 offenbart, ist ein Einbauteil bekannt, bei welchem die Außenringe der Lager auf einen selben Durchmesser in dem Aufnahmeteil abgestützt sind. Das Aufnahmeteil ist nach unten und oben offen. Weiter sind Aufnahmeteile im Stand der Technik aus der US 2005/018351 A1, der US 2002/172443 A1, der DE 9111191 U1 und der EP 0 433 725 A1 bekannt. Die Erfindung beschäftigt sich mit der Aufgabenstellung, ein Einbauteil der genannten Art anzugeben, das insbesondere im Hinblick auf eine günstige Montage vorteilhaft ist und ein Verfahren zur Montage anzugeben.

Diese Aufgabe ist zunächst beim Gegenstand des Anspruches 1 gelöst, wobei darauf abgestellt ist, dass das Aufnahmeteil topfförmig ausgebildet ist mit einer sich zur Topföffnung hin öffnenden Erweiterung, in welche der obere Außenring einsitzt, dass der obere Außenring gegenüber dem unteren Außenring durchmesservergrößert ist und dass die Topföffnung durch einen das obere Wälzlager überdeckenden Deckel überdeckt ist, der mit dem Aufnahmeteil verklebt ist.

Diese Aufgabe ist verfahrensmäßig durch den Gegenstand des Anspruches 5 gelöst, wobei darauf abgestellt ist, dass die Belastung über den Außenring des oberen Wälzlagers, über den Innenring des oberen Wälzlagers und das Distanzteil auf den Innenring des unteren Wälzlagers und weiter über den Außenring des unteren Wälzlagers auf den Topfboden zur Wirkung gebracht wird.

Die Verklebung des mindestens einen Außenringes mit dem Aufnahmeteil dient bevorzugt zur Erhaltung der im Zuge der Montage eingestellten Lagervorspannung, welche Lagervorspannung entsprechend nach Aushärten des Klebstoffes ohne weitere Einwirkung auf das eine oder beide Wälzlager beibehalten wird. Auf die Anordnung von beispielsweise in dem Einbauteil vorzusehender, zumindest auf ein Wälzlager einwirkender Federelemente kann verzichtet werden. Entsprechend ist hierdurch weiter eine Bauteilreduzierung, darüber hinaus eine Gewichtseinsparung erreichbar.

In weiter bevorzugter Ausgestaltung ist vorgesehen, dass beide Außenringe der axial zueinander distanzierten Wälzlager mit dem Aufnahmeteil verklebt sind.

Der weiter bevorzugt dem Antriebsende der Welle zugewandte Außenring des entsprechenden Wälzlagers, d.h. weiter der untere Außenring, sitzt in bevorzugter Ausgestaltung auf einem Widerlager des Aufnahmeteils auf. Das Widerlager ist hierbei weiter bevorzugt gebildet durch den Topfboden des insgesamt bevorzugt topfförmigen Aufnahmeteils. Entsprechend ist weiter bevorzugt der Außenring des unteren Wälzlagers im Zuge der Einstellung der Lagervorspannung nicht in seinem axialen Sitz verlagerbar.

Der obere Außenring, d.h. der Außenring des bevorzugt dem Abtriebsende der Welle zugeordneten Wälzlagers ist bevorzugt an der zugeordneten Innenfläche des Aufnahmeteiles allein durch die Verklebung gehalten. Dieser obere Außenring ist vor einer Verklebung beziehungsweise vor einer Aushärtung des Klebstoffes in seinem Axialsitz bis zur Erreichung der vorgegebenen Lagervorspannung in Axialrichtung der Welle betrachtet verlagerbar.

Das Aufnahmeteil ist topfteilförmig ausgebildet mit einem im Topfboden mittig ausgebildeten Durchlass für die Welle. Das Topfinnere ist durchsetzt von der Welle, nimmt darüber hinaus die Wälzlager auf. Die dem Topfboden abgewandte Topföffnung des Aufnahmeteiles ist überdeckt von einem insbesondere die Wälzlager schützenden Deckel.

Für die Klebeverbindung wird bevorzugt ein UV-aushärtender Einkomponenten-Arylatklebstoff verwendet.

Nachstehend ist die Erfindung anhand der beigefügten Zeichnung erläutert, die aber lediglich ein Ausführungsbeispiel darstellt. Auf der Zeichnung zeigt:
- Fig. 1: in einer Axialschnittdarstellung ein Einbauteil in Form eines Messerlagers, einliegend in einer Lagervorspanneinrichtung;
- Fig. 2: eine der Figur 1 entsprechende Darstellung, jedoch bei Belastung durch die Einrichtung zur Einstellung der Lagervorspannung.

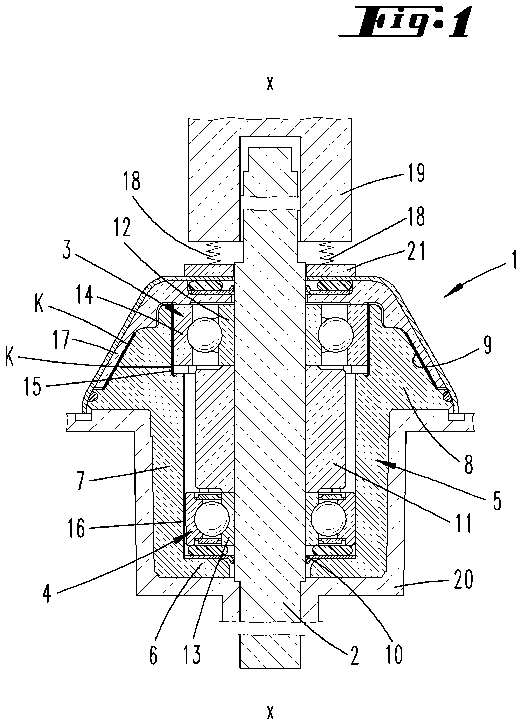

Dargestellt und beschrieben ist zunächst mit Bezug zu Figur 1 ein Einbauteil 1 in Form eines Messerlagers für eine Küchenmaschine.

Das Einbauteil 1 weist zunächst eine Welle 2 auf, über welche im Betriebszustand ein nicht dargestelltes Messerwerk in einem Rührgefäß der Küchenmaschine antreibbar ist.

Die Welle 2 ist über zwei in Axialrichtung der Welle zueinander distanzierte Wälzlager 3, 4 in einem Aufnahmeteil 5 des Einbauteiles 1 gelagert.

Das Aufnahmeteil 5 ist insgesamt im Wesentlichen topfförmig gestaltet, mit einem Topfboden 6 und einer, bei rotationssymmetrischer Ausgestaltung des Aufnahmeteiles 5 umlaufenden Topfwandung 7. Letztere geht abgewandt der Topfwandung 6 bevorzugt über in einen Konusabschnitt 8, welcher wandungsaußenseitig eine im Axialquerschnitt gemäß Figur 1 mit zunehmender Beabstandung zum Topfboden 6 in Richtung auf eine Wellenachse x geneigte Konusfläche 9 bildet.

Die Welle 2 durchsetzt den Topfboden 6 im Bereich eines Durchlasses 10, hierbei weiter das Topfinnere des Aufnahmeteils 5 durchsetzend, wobei die Wellenachse x in der Montagesituation gemäß Figur 1 bevorzugt zugleich auch die Mittelachse des Einbauteiles 1 darstellt.

Die Welle 2 stützt sich innerhalb des Aufnahmeteiles 5 über die zwei axial zueinander beabstandeten Wälzlager 3 und 4 ab. Hierbei ist das Wälzlager 4 mit Bezug auf die Darstellung unten angeordnet, sich hierbei mittelbar oder unmittelbar auf der zugewandten Oberfläche des Topfbodens 6 abstützend.

Die Wälzlager 3 und 4 sind zueinander über ein Distanzteil 11 beabstandet, welches Distanzteil 11 als rotationssymmetrisches Bauteil, die Welle 2 frei umfassend ausgebildet ist. Die jeweils in Axialrichtung weisenden Stirnflächen des Distanzteiles 11 sind hierbei so ausgebildet, dass diese bevorzugt nur auf den jeweils zugewandten Innenring 12, 13 des jeweiligen Wälzlagers 3, 4 wirkt.

Das weitere Wälzlager 3, welches im Betriebszustand des Einbauteiles 1 bevorzugt dem, das Messerwerk tragenden Ende der Welle 2 zugeordnet ist, ist bevorzugt gegenüber dem unteren Wälzlager 4 durchmesservergrößert, dies weiter insbesondere hinsichtlich des Außendurchmessers des Außenringes 14. Während dieser Außenring 14 in einer axial verbreiterten, sich zur Topföffnung hin öffnenden Erweiterung 15 des Topfinneren einsitzt, stützt sich der Außenring 16 des unteren Wälzlagers 4 unmittelbar an der Topfinnenwandung ab.

Die Erweiterung 15 weist weiter ausgehend von der Topföffnungsebene eine größere axiale Länge auf als der hier einliegende und sich an der Wandung der Erweiterung 15 abstützende Außenring 14.

Die Topföffnung und hierbei entsprechend auch insbesondere das obere Wälzlager 3 sind überdeckt von einem Deckel 17. Der Deckel 17 ist hierbei angepasst an die konische Außengestaltung des Aufnahmeteiles 5. Die der Konusfläche 9 des Aufnahmeteiles 5 zugewandte Fläche des Deckels 17 ist gleichfalls angepasst konisch ausgebildet.

Die Welle 2 durchsetzt den Deckel 17 im Bereich einer Durchtrittsöffnung.

Der Deckel 17 wird mit dem Aufnahmeteil 5 befestigt, beispielsweise verklebt.

Die Innen- und Außenringe der Wälzlager 3 und 4, wie auch bevorzugt das Distanzteil 11 sind aus einem Metallwerkstoff gebildet. Auch das Aufnahmeteil 5 wie auch der Deckel 17 können aus einem solchen Metallwerkstoff bestehen, alternativ aus einem hochfesten Hartkunststoff.

Vor einem Einsetzen des oberen Wälzlagers 3 in die Erweiterung 15 des Aufnahmeteiles 5 wird bevorzugt die umlaufende Fläche der Erweiterung 15 mit einem bevorzugt hochfesten Klebstoff K benetzt beziehungsweise bestrichen. Dieser dient zur Festlegung insbesondere des Außenringes 14 des Wälzlagers 3. Die Montage beziehungsweise Festlegung des Wälzlagers 3 erfolgt bevorzugt unter Kraftbeaufschlagung desselben in Axialrichtung, dies zum Einstellen einer vorgegebenen Lagervorspannung zwischen den Wälzlagern 3 und 4 in Axialrichtung.

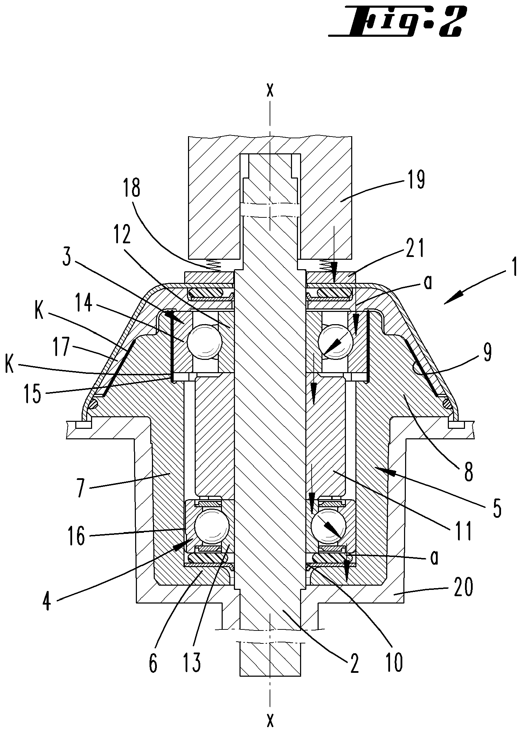

Hierzu wirkt unter Zwischenschaltung einer oder mehrerer Federn 18 ein Stempel 19 insbesondere mittelbar auf die quer zur Wellenachse x ausgerichtete Oberfläche des Deckels 17 ein, wobei weiter das Aufnahmeteil 5 in einem Gegenhalter 20 ruht. Weiter bevorzugt wirkt der Stempel 19 über die Federn 18 auf eine, auf dem Deckel 17 aufliegende, kreisringförmige Druckscheibe 21. Gemäß den Pfeilen a in Figur 2 wirkt die Belastung über den Außenring 14 des Wälzlagers 3, über den Innenring 12 des Wälzlagers 3 und das Distanzteil 11 auf den Innenring 13 des Wälzlagers 4 und weiter über den Außenring 16 des Wälzlagers 4 auf den Topfboden 6.

Im Zuge der Belastung und der Einstellung der Vorspannung ist eine axiale Verlagerung des Wälzlagers 3, d.h. eine relative Verlagerung dessen Außenringes 14 zur zugewandten Wandung der Erweiterung 15 möglich.

Die Belastung wird hiernach bis zum Aushärten des Klebstoffs K beibehalten, wonach das Wälzlager 3 in der gefundenen Axialstellung innerhalb der Erweiterung 15 des Aufnahmeteiles 5 fixiert ist. Die gefundene Stellung zur Erhaltung der Lagervorspannung wird quasi eingefroren.

Die Feder 18 ermöglicht die Einstellung eines Planlaufes von Gehäuse beziehungsweise Aufnahmeteil 5 zu der fixierten Welle 2 bei Einhaltung einer maximal zulässigen Schiefstellung zwischen Innenring 12 und Außenring 14 des oberen Lagers 3. Die Feder 18 dient so insbesondere zum Toleranzausgleich.

**Bezugszeichenliste:**

| | | | |
|---|---|---|---|
| 1 | Einbauteil | a | Pfeil |
| 2 | Welle | x | Wellenachse |
| 3 | Wälzlager | | |
| 4 | Wälzlager | K | Klebstoff |
| 5 | Aufnahmeteil | | |
| 6 | Topfboden | | |
| 7 | Topfwandung | | |
| 8 | Konusabschnitt | | |
| 9 | Konusfläche | | |
| 10 | Durchlass | | |
| 11 | Distanzteil | | |
| 12 | Innenring | | |
| 13 | Innenring | | |
| 14 | Außenring | | |
| 15 | Erweiterung | | |
| 16 | Außenring | | |
| 17 | Deckel | | |
| 18 | Feder | | |
| 19 | Stempel | | |
| 20 | Gegenhalter | | |
| 21 | Druckscheibe | | |

## Patentansprüche

1. Einbauteil (1), beispielsweise einer Küchenmaschine, mit einer Welle (2), wobei die Welle (2) mittels zweier axial hintereinander positionierter Wälzlager (3, 4) mit jeweils einem Innenring (12, 13) und einem Außenring (14, 16) gelagert ist, die Wälzlager (3, 4) jeweils durch ein nur auf die zugewandten Innenringe wirkendes Distanzteil (11) in Axialrichtung beabstandet sind und zusammen mit dem Distanzteil (11) in einem Aufnahmeteil (5) aufgenommen sind, wobei beide Außenringe mit dem Aufnahmeteil (5) verklebt sind, **dadurch gekennzeichnet, dass** das Aufnahmeteil (5) topfteilförmig ausgebildet ist mit einer sich zur Topföffnung hin öffnenden Erweiterung, in welcher der Außenring (14) des ersten, oberen Wälzlagers (3) einsitzt, dass der Außenring (14) des ersten, oberen Wälzlagers (3) gegenüber dem (16) des zweiten, unteren Wälzlagers (4) durchmesservergrößert ist und dass die Topföffnung durch einen das erste, obere Wälzlager (3) überdeckenden Deckel (17) überdeckt ist, der mit dem Aufnahmeteil (5) verklebt ist.

2. Einbauteil nach Anspruch 1, **dadurch gekennzeichnet, dass** der Außenring (16) des zweiten, unteren Wälzlagers (4) auf einem Widerlager des Aufnahmeteils (5) aufsitzt.

3. Einbauteil nach einem der vorhergehenden Ansprüche, **dadurch gekennzeichnet, dass** der Außenring (14) des ersten, oberen Wälzlagers (3) an der zugeordneten Innenfläche des Aufnahmeteils (5) nur durch die Verklebung gehalten ist.

4. Einbauteil nach einem der vorhergehenden Ansprüche, **dadurch gekennzeichnet, dass** das Aufnahmeteil (5) im Topfboden (6) mit einem mittig ausgebildeten Durchlass (10) für die Welle (2) ausgebildet ist.

5. Verfahren zur Montage eines Einbauteils (1), beispielsweise einer Küchenmaschine, mit einer Welle (2), wobei die Welle (2) mittels zweier axial hintereinander positionierter Wälzlager (3, 4) mit jeweils einem Innenring (12, 13) und einem Außenring (14, 16) gelagert wird und die Wälzlager (3, 4) durch ein Distanzteil (11) in Axialrichtung beabstandet werden, zusammen mit dem Distanzteil (11) in einem Aufnahmeteil (5) aufgenommen werden und mindestens ein Außenring (14, 16) mit dem Aufnahmeteil (5) verklebt wird und durch axiale Belastung auf den Außenring (14) des Lagers (3) eine Vorspannung zwischen den Lagern (3, 4) aufgebaut wird, wobei die Belastung bis zum Aushärten des Klebstoffs (K) beibehalten wird, **dadurch gekennzeichnet, dass** die Belastung über den Außenring (14) des ersten, oberen Wälzlagers (3), über den Innenring (12) des ersten, oberen Wälzlagers (3) und das Distanzteil (11) auf den Innenring (13) des zweiten, unteren Wälzlagers (4) und weiter über den Außenring (16) des zweiten, unteren Wälzlagers (4) auf den Topfboden (6) zur Wirkung gebracht wird.

## Claims

1. Built-in part (1), for example of a kitchen appliance, comprising a shaft (2), the shaft (2) being mounted by means of two rolling bearings (3, 4) that are axially positioned one behind the other and that each comprise an inner ring (12, 13) and an outer ring (14, 16), the rolling bearings (3, 4) each being spaced apart in the axial direction by means of a spacer part (11) that acts only on the facing inner rings and being received, together with the spacer part (11), in a receiving part (5), the two outer rings being bonded to the receiving part (5), **characterised in that** the receiving part (5) is pot-shaped having an extension that opens towards the pot opening, in which extension the outer ring (14) of the first, upper rolling bearing (3) is located, **in that** the outer ring (14) of the first, upper rolling bearing (3) is larger in diameter relative to the outer ring (16) of the second, lower rolling bearing (4), and **in that** the pot opening is covered by a lid (17) that covers the first, upper rolling bearing (3) and to which the receiving part (5) is bonded.

2. Built-in part according to claim 1, **characterised in that** the outer ring (16) of the second, lower rolling bearing (4) rests on an abutment of the receiving part (5).

3. Built-in part according to either of the preceding claims, **characterised in that** the outer ring (14) of the first, upper rolling bearing (3) is held on the associated inner surface of the receiving part (5) only by bonding.

4. Built-in part according to any of the preceding claims, **characterised in that** the receiving part (5) in the pot base (6) is formed comprising a passage (10) for the shaft (2) in the centre.

5. Method for installing a built-in part (1), for example of a kitchen appliance, comprising a shaft (2), the shaft (2) being mounted by means of two rolling bearings (3, 4) that are axially positioned one behind the other and that each comprise an inner ring (12, 13) and an outer ring (14, 16), and the rolling bearings (3, 4) being spaced apart in the axial direction by means of a spacer part (11), being received, together with the spacer part (11), in a receiving part (5), and at least one outer ring (14, 16) being bonded to the receiving part (5) and a preload being formed between the bearings (3, 4) on account of axial load on the outer ring (14) of the bearing (3), the load being maintained until the adhesive (K) cures, **characterised in that** the load is applied to the inner ring (13) of the second, lower rolling bearing (4) via the outer ring (14) of the first, upper rolling bearing (3), via the inner ring (12) of the first, upper rolling bearing (3) and the spacer part (11) and further to the pot base (6) via the outer ring (16) of the second, lower rolling bearing (4).

## Revendications

1. Composant (1), par exemple d'un robot de cuisine, avec un arbre (2), dans lequel l'arbre (2) est monté au moyen de deux paliers à roulement (3, 4) disposés axialement l'un après l'autre et comportant chacun une bague intérieure (12, 13) et une bague extérieure (14, 16), les paliers à roulement (3, 4) sont espacés dans la direction axiale par une entretoise (11) agissant uniquement sur les bagues intérieures opposées et sont logés ensemble avec l'entretoise (11) dans une pièce de réception (5), dans lequel les deux bagues extérieures sont collées à la pièce de réception (5), **caractérisé en ce que** la pièce de réception (5) est réalisée en forme de pot avec un élargissement ouvert vers l'ouverture de pot dans laquelle est logée la bague extérieure (14) du premier palier à roulement supérieur (3), **en ce que** la bague extérieure (14) du premier palier à roulement supérieur (3) a un diamètre agrandi par rapport à la bague extérieure (16) du deuxième palier à roulement inférieur (4), et **en ce que** l'ouverture de pot est recouverte par un couvercle (17) recouvrant le premier palier à roulement supérieur (3), qui est collé à la pièce de réception (5).

2. Composant selon la revendication 1, **caractérisé en ce que** la bague extérieure (16) du deuxième palier à roulement inférieur (4) est en appui sur une butée de la pièce de réception (5).

3. Composant selon l'une des revendications précédentes, **caractérisé en ce que** la bague extérieure (14) du premier palier à roulement supérieur (3) est maintenue sur la surface interne associée de la pièce de réception (5) uniquement par le collage.

4. Composant selon l'une des revendications précédentes, **caractérisé en ce que** la pièce de réception (5) est formée avec un passage (10) pour l'arbre (2) formé centralement dans le fond du pot (6).

5. Procédé de montage d'un composant (1), par exemple d'un robot de cuisine, avec un arbre (2), dans lequel l'arbre (2) est monté au moyen de deux paliers à roulement (3, 4) disposés axialement l'un après l'autre et comportant chacun une bague intérieure (12, 13) et une bague extérieure (14, 16), et les paliers à roulement (3, 4) sont espacés dans la direction axiale par une entretoise (11) et reçus ensemble avec l'entretoise (11) dans une partie de réception (5), et au moins un bague extérieure (14, 16) est collée à la partie de réception (5), et une précontrainte est engendrée entre les paliers (3, 4) par application d'une charge axiale sur la bague extérieure (14) du palier à roulement (3), dans lequel la charge est maintenue jusqu'au durcissement de l'adhésif (K), **caractérisé en ce que** la charge est amenée à agir sur la bague intérieure (13) du deuxième palier à roulement inférieur (4) via la bague extérieure (14) du premier palier à roulement supérieur (3), via la bague intérieure (12) du premier palier à roulement supérieur (3) et l'entretoise (11), et ensuite sur le fond de pot (6) via la bague extérieure (16) du deuxième palier à roulement inférieur (4).
